# FASCICULE DE BREVET EUROPEEN

(11) **EP 1 805 045 B1**
(45) Date de publication et mention de la délivrance du brevet: **22.12.2010**
(21) Numéro de dépôt: 05810803.6
(22) Date de dépôt: 07.10.2005
(51) Int. Cl.: B60B 35/04, B60G 21/02

(54) **TRAIN DE VEHICULE AUTOMOBILE ASSEMBLE PAR COLLAGE STRUCTURAL**
DURCH STRUKTURKLEBUNG ZUSAMMENGEFÜGTES STRUKTURELLES MOTORFAHRZEUGACHSENSYSTEM
STRUCTURAL MOTOR VEHICLE AXLE SYSTEM ASSEMBLED BY STRUCTURAL BONDING

(30) Priorité: 18.10.2004 FR 0411001
(43) Date de publication de la demande: 11.07.2007
(73) Titulaire: RENAULT S.A.S., 92100 Boulogne Billancourt (FR)
(72) Inventeur: RENARD, Jacques, F-91160 CHAMPLAN (FR); DE POMPIGNAN, Alexis, F-72000 LE MANS (FR); CRIQUI, Bernard, F-92150 SURESNES (FR); BERSON, Julien, F-72000 LE MANS (FR); FAYS, Samuel, F-91190 GIF SUR YVETTE (FR)
(86) Numéro de dépôt international: PCT/FR2005/050831
(87) Numéro de publication internationale: WO 2006/042988

(56) Documents cités:
- EP-A- 1 036 680
- DE-A1- 19 542 523
- US-A- 5 800 024
- US-A- 6 099 084

## Description

L'invention concerne un train de véhicule automobile assemblé par collage structural et son procédé d'assemblage. L'invention concerne plus particulièrement les trains à essieu torsible.

Actuellement, les trains à essieu torsible sont en acier assemblés par soudure à l'arc. Cette structure est économique et confère de bonnes performances au train mais présente l'inconvénient d'être de poids élevé et d'induire des altérations des propriétés mécaniques des matériaux dans la zone d'assemblage dues à la soudure.

On connaît des trains allégés comportant des bras longitudinaux en aluminium articulés au moyen de pivots afin d'éviter d'induire des contraintes dans les zones d'assemblage. Cette structure présente l'inconvénient de compliquer la cinématique des pièces et d'augmenter le coût de l'ensemble.

Le document EP-1 036 680 décrit un train allégé formé de bras moulés en aluminium et d'une traverse en acier. La traverse est emmanchée dans les bras, et un espace ménagé entre la traverse et les bras est rempli de colle. La jonction est ensuite comprimée pour finaliser l'assemblage. Cette étape de compression crée des contraintes dans les matériaux assemblés et dans la colle qui peuvent conduire à une fragilisation de l'assemblage. Par ailleurs, cette jonction nécessite des tolérances de fabrication serrées ainsi que l'emploi d'adhésifs anaérobies qui ne présentent pas de tenues optimales, en particulier afin d'éviter le raclage de l'adhésif lors de l'assemblage des deux pièces.

Un autre document US-6 099 084 décrit un train allégé formé d'une traverse en aluminium assemblée par emmanchement à force, et éventuellement frettage, dans les bras de suspension. Dans ce cas également, l'emmanchement crée des contraintes importantes qui peuvent aboutir à une fragilisation des zones d'assemblage, et nécessite des tolérances de fabrication serrées et l'emploi d'adhésifs anaérobies pour les mêmes raisons que le document précédent. De plus, le couple de serrage obtenu est limité.

L'invention vise à pallier ces inconvénients en proposant un train de véhicule formé de deux matériaux différents, assemblés de manière simple, sûre et peu coûteuse.

A cet effet, l'objet de l'invention concerne un train de véhicule automobile comprenant deux bras longitudinaux réalisés en matériau moulé et une traverse torsible réalisée en un matériau à haute résistance différent du matériau des bras, chaque bras comportant un talon, de profil fermé sensiblement tubulaire et d'axe sensiblement perpendiculaire à l'axe des bras, pour assembler par collage structural la traverse aux bras, **caractérisé en ce que** chaque talon présente un bord d'assemblage apte à être assemblé à une extrémité de la traverse en générant un auto-frettage avec une surface de la traverse, une couche d'adhésif étant appliquée entre le bord d'assemblage et la surface de la traverse, et en ce que le bord d'assemblage de chaque talon présente une épaisseur variable le long de sa périphérie et dans la direction de l'axe du talon, cette épaisseur étant choisie de manière à minimiser les contraintes subies par l'adhésif dans la zone d'assemblage.

Les bras étant réalisés par moulage, l'épaisseur de leurs parties d'emmanchement peut être contrôlée avec une bonne précision, de sorte que les contraintes subies par l'adhésif peuvent également être contrôlées. Il en résulte un risque d'arrachement très faible de l'adhésif. Associé à l'auto-frettage des parties assemblées, ce collage permet d'obtenir un assemblage présentant une durée de vie sensiblement égale à la durée de vie du véhicule automobile. L'auto-frettage présente l'avantage d'induire des contraintes internes dans les zones assemblées nettement moins élevées que lors d'un emboutissage ou d'un montage en force, de sorte que les propriétés mécaniques des matériaux dans la zone d'assemblage sont peu ou pas dégradées. Il présente également l'avantage d'éviter le raclage de l'adhésif lors de la mise en oeuvre et est donc plus favorable à l'utilisation d'adhésifs structuraux et des procédés de mise en oeuvre usuels de l'industrie automobile.

Avantageusement, le bord d'assemblage de chaque talon présente une largeur variable le long de sa périphérie. Cette largeur est choisie de manière à réduire au minimum les contraintes subies par l'adhésif. Par exemple, dans les zones à fortes contraintes, cette largeur sera de préférence augmentée de manière à réduire les contraintes locales subies par l'adhésif et améliorer la résistance de l'assemblage. Cette largeur est également choisie de manière à être suffisante pour permettre un transfert de force correct entre les pièces assemblées.

Dans un mode de réalisation particulier, le bord d'assemblage de chaque talon est formé d'une paroi tubulaire.

Dans un autre mode de réalisation, le bord d'assemblage de chaque talon est formé d'une paroi tubulaire interne et d'une paroi tubulaire externe séparées par une gorge conçue apte à recevoir l'extrémité de la traverse. Une telle configuration du bord d'assemblage permet d'améliorer la robustesse de l'assemblage.

De préférence, la paroi tubulaire du bord d'assemblage, ou la paroi interne de la gorge du bord d'assemblage, est apte à générer un auto-frettage avec la surface interne de l'extrémité de la traverse. Dans la deuxième configuration, la paroi externe de la gorge force alors l'extrémité de la traverse à rester dans sa position en contact contre la paroi interne, de sorte que les contraintes mécaniques à l'intérieur de l'adhésif sont limitées, ainsi que les risques d'arrachement de ce dernier.

De préférence encore, lorsque le bord d'assemblage est formé de deux parois, une deuxième couche d'adhésif est appliquée entre la surface externe de l'extrémité de la traverse et la paroi externe de la gorge de manière à renforcer davantage la robustesse de l'assemblage.

Avantageusement, une bague de dimensions internes sensiblement correspondantes aux dimensions externes de la traverse, ou du talon, est sertie autour des extrémités de la traverse, ou du talon, au niveau du bord d'assemblage de chaque talon, de manière à augmenter encore davantage la robustesse de l'assemblage.

Dans un premier mode de réalisation, chaque extrémité de la traverse présente une section ouverte dirigée vers le sol. Une telle configuration permet d'obtenir une faible raideur en torsion du train.

Dans un autre mode de réalisation, les extrémités de la traverse présentent une section fermée de section croissante, et les bords d'assemblage des talons présentent une section décroissante de forme sensiblement correspondante. Cette configuration augmente la raideur en torsion du train.

Avantageusement, la partie centrale de la traverse présente une section ouverte, conférant une raideur en flexion importante propice au maintien de l'épure du train, et une souplesse en torsion assurant le confort.

Avantageusement, la traverse et les bras sont en des matériaux non métallurgiquement soudables. De préférence, la traverse est en acier à haute résistance et les bras sont en aluminium moulé. Des matériaux performants vis-à-vis de leur fonctionnalité spécifique sont ainsi utilisés. L'acier est le matériau le plus résistant pour conférer à la traverse sa fonction élastique tout en supportant des sollicitations en fatigue, torsion, flexion et traction, tandis que l'aluminium moulé des bras permet de réaliser des formes très ouvragées intégrant toutes les fonctions de support de roue, de ressort de suspension, de pivot et d'attache des bras longitudinaux. Un train performant et allégé est alors obtenu.

L'invention concerne également un procédé d'assemblage de ce train de véhicule automobile tel que défini dans les revendications.

L'invention est maintenant décrite en référence aux dessins annexés, non limitatifs, dans lesquels :
- la figure 1 est une représentation en perspective du dessous d'un train de véhicule selon un premier mode de réalisation de l'invention ;
- la figure 2 est une vue agrandie de la zone d'assemblage d'un bras et de la traverse du train de la figure 1, avant assemblage ;
- les figures 3 à 5 sont des vues agrandies de la même zone d'assemblage d'autres modes de réalisation d'un train selon l'invention, avant assemblage ;

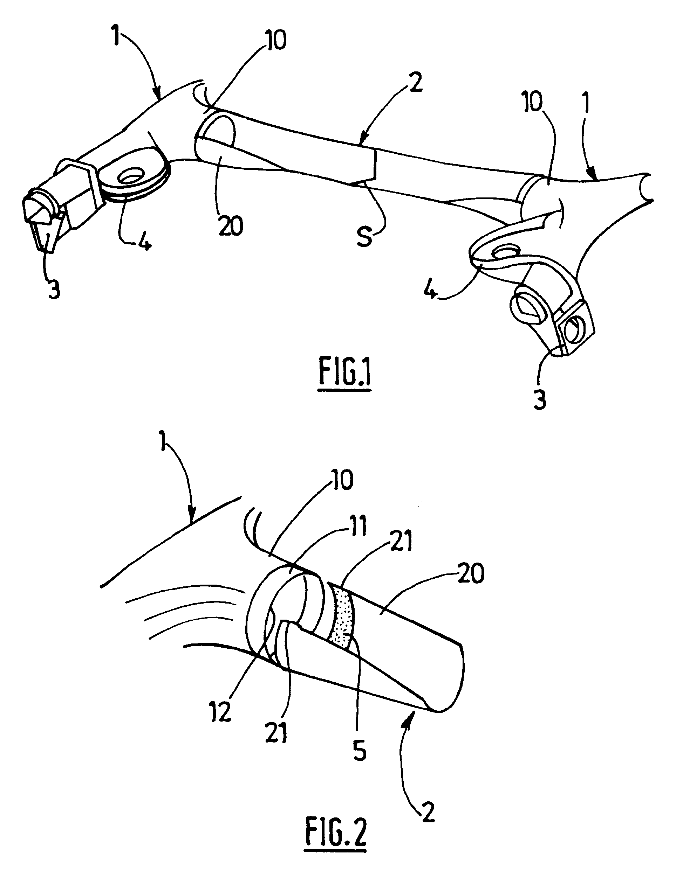

La figure 1 représente un train de véhicule comportant deux bras longitudinaux 1 reliés par une traverse torsible 2.

Les bras sont réalisés en aluminium moulé et comportent chacun diverses fonctions, telles qu'un support de roue 3, un support de suspension 4, et une articulation sur le véhicule (non représentée).

La traverse est quant à elle en acier à haute résistance élastique. Elle est par exemple réalisée par emboutissage d'une tôle sur une presse en plusieurs passages de manière à obtenir la section et l'épaisseur voulues. Elle présente une section ouverte sur toute sa longueur, la forme et les dimensions de cette section ouverte variant entre les extrémités de la traverse de manière à lui conférer les propriétés de raideur et de flexion voulues. De préférence, cette section présente sur sa plus grande longueur une inertie à la flexion importante tout en conservant une souplesse à la torsion. La ligne S sur la figure 1 représente un exemple de forme de la section de la traverse à proximité de son milieu.

Chaque bras 1 comporte un talon 10, de profil fermé et d'axe sensiblement perpendiculaire à l'axe des bras, pour l'assemblage du bras avec une extrémité 20 de la traverse. A cet effet, la surface externe du talon 10 présente un bord d'assemblage 11 destiné à venir en contact avec la surface interne de l'extrémité de la traverse.

Dans un premier mode de réalisation représenté sur les figures 1 et 2, le bord d'assemblage 11 du talon 10 présente une forme tubulaire fermée, cylindrique dans l'exemple. Chaque extrémité 20 de la traverse présente une section ouverte dont l'ouverture est dirigée vers le sol et qui va être appliquée contre le bord d'assemblage 11 d'un talon 10. La section de l'extrémité est choisie de manière à recouvrir le bord d'assemblage sur environ la moitié, de préférence environ les deux tiers, de la périphérie du talon 10. Le degré d'ouverture de la section ouverte est défini en fonction des spécifications de raideur en torsion de la traverse, tout en restant suffisant pour permettre un serrage correct de l'extrémité de la traverse sur le talon. Les dimensions de cette section ouverte sont définies en fonction de la raideur en flexion de la traverse.

Les dimensions des bords d'assemblage 11 des talons 10 des bras et des extrémités 20 de la traverse sont choisies de manière à générer un auto-frettage entre les surfaces en contact des parties assemblées, dans l'exemple, la face interne des extrémités 20 de la traverse et la surface externe des bords d'assemblage 11.

Le bord de l'extrémité 20, destiné à être appliqué contre le bord d'assemblage 11 de chaque talon 10, est enduit d'une couche d'adhésif 5 sur sensiblement toute sa surface (l'adhésif peut également être appliqué sur la partie correspondante du bord d'assemblage). Après assemblage de la traverse et du bras, cette couche d'adhésif 5 va subir des contraintes élevées au niveau du bord libre 12 du bord d'assemblage, et au niveau des bords libres 21 des extrémités de la traverse qui s'étendent parallèlement à la plus grand longueur de celle-ci. Afin de répartir ces contraintes, l'épaisseur du bord d'assemblage est adaptée dans ces zones de contraintes élevées dans la direction de l'axe du talon et suivant la périphérie du talon. Cette épaisseur est par exemple réduite.

Dans l'exemple, l'épaisseur des zones du bord d'assemblage 11, correspondant aux contraintes les plus élevées subies par l'adhésif, varie de 1 à 9 mm environ au minimum, et de 3 à 15 mm environ au maximum, le profil d'épaisseur étant tel que les concentrations de contraintes soient limitées et que l'on tende vers une distribution homogène de celles-ci sur la largeur de collage.

La largeur du bord d'assemblage 11 est également choisie de manière à améliorer la répartition des contraintes subies par la couche d'adhésif après l'assemblage. Cette largeur est par exemple de l'ordre de 40 mm environ.

L'assemblage de ce train est réalisé de la manière suivante. Les surfaces internes des extrémités 20 de la traverse sont recouvertes d'une couche d'adhésif 5. Puis ces extrémités ouvertes 20 sont légèrement écartées de manière à agrandir leur section, et engagées autour des bords d'assemblage. Une fois en position, les extrémités de la traverse sont relâchées de sorte que leur section se resserre sur le bord d'assemblage 11, assurant un frettage favorisant une bonne cohésion du collage. La couche d'adhésif 5 est ensuite durcie à température ambiante ou par chauffage selon sa nature. On peut par exemple utiliser comme type d'adhésif des adhésifs époxydes acryliques ou polyuréthanes.

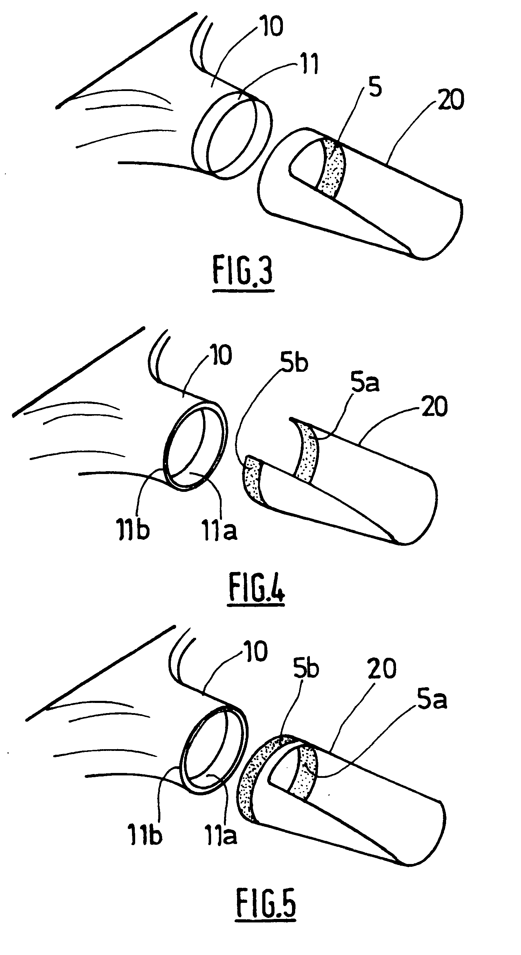

La figure 3 représente une variante du mode de réalisation précédent. Dans ce mode de réalisation, les extrémités 20 de la traverse présentent une section fermée de forme évasée. Dans l'exemple, cette section est conique. Les bords d'assemblage 11 présentent alors également une forme conique sensiblement correspondante de manière à permette un auto-frettage des surfaces en contact. La couche d'adhésif 5 est appliquée sur le bord d'assemblage 11 sur lequel est emmanchée l'extrémité fermée 20 de la traverse jusqu'à obtenir le frettage des pièces.

Une telle forme évasée des extrémités de la traverse vient épouser la forme idéale du talon du bras. Le rayon de raccordement est alors de préférence choisi de manière à limiter la formation de contraintes entre la zone d'assemblage du bras et de la traverse, et les parties courbes du bras autour du talon menant au support de roue 3 et à la liaison au véhicule.

Dans les deux modes de réalisation décrits ci-dessus, le bord d'assemblage du talon des bras est légèrement en retrait de la surface du reste du bras, de sorte qu'une fois assemblée, la surface externe de la traverse affleure avec la surface externe du reste du bras. Une telle configuration peut toutefois n'être pas prévue dans d'autres modes de réalisation.

La figure 4 représente un autre mode de réalisation des bords d'assemblage 11 des talons. Ces bords d'assemblage 11 sont formés de deux parois tubulaires interne 1 la et externe 11b en regard, séparées par une gorge conçue pour recevoir l'extrémité 20 de la traverse. Dans l'exemple représenté, les parois 11a, 11b de la gorge sont cylindriques, et l'extrémité 20 de la gorge présente une section ouverte semblable au mode de réalisation de la figure 1. La paroi interne 11a de la gorge est conçue de manière à générer un auto-frettage avec la surface interne de l'extrémité de la traverse.

Dans cet exemple, une première couche d'adhésif 5a est appliquée sur la paroi interne 11a du bord d'assemblage 11, (ou bien sur la face interne de l'extrémité de la traverse), et une deuxième couche d'adhésif 5b est appliquée sur la face externe de l'extrémité de la traverse (ou sur la paroi externe 11b du bord d'assemblage 11 en regard de la paroi interne 11a). L'extrémité ouverte 20 de la traverse est alors légèrement ouverte et emmanchée dans la gorge, puis relâchée pour se resserrer sur la paroi interne 1 la du bord d'assemblage 11.

En variante, la paroi externe 11b de la gorge pourrait également être conçue de manière à générer un auto-frettage avec l'extrémité de la traverse. Au lieu d'être ouverte, l'extrémité 20 serait alors légèrement refermée lors de son emmanchement.

La figure 5 représente une variante de ce mode de réalisation, dans laquelle les extrémités 20 de la traverse sont fermées et évasées. Dans l'exemple, ces extrémités 20 sont coniques, de même que les parois interne 11a et externe 11b de chaque bord d'assemblage. L'assemblage est alors réalisé de manière similaire que pour l'exemple correspondant à la figure 3, avec deux couches d'adhésif à l'extérieur et à l'intérieur de l'extrémité de la traverse. La largeur de recouvrement peut être de 40 à 60 mm environ.

Dans ces exemples, les bords d'assemblages des talons et les extrémités de la traverse présentent une section circulaire. D'autres formes de section peuvent bien sûr être réalisées, et les différentes variantes décrites en référence aux figures peuvent être combinées entre elles. Il est également possible d'emmancher les extrémités de la traverse à l'intérieur des talons des bras. L'auto-frettage est alors généré entre la surface externe de ces extrémités et la surface interne du talon.

Afin de renforcer la robustesse de l'assemblage, une bague peut être sertie autour du talon ou de la traverse au niveau des bords d'assemblage. Une telle bague est par exemple mise en place de manière à générer également un auto-frettage avec la surface de la partie qu'elle entoure.

## Revendications

1. Train de véhicule automobile comprenant deux bras (1) longitudinaux réalisés en matériau moulé et une traverse torsible (2) réalisée en un matériau à haute résistance différent du matériau des bras, chaque bras comportant un talon (10), de profil fermé sensiblement tubulaire et d'axe sensiblement perpendiculaire à l'axe des bras, pour assembler par collage structural la traverse aux bras, **caractérisé en ce que** chaque talon (10) présente un bord d'assemblage (11) apte à être assemblé à une extrémité (20) de la traverse en générant un auto-frettage avec une surface de la traverse, une couche d'adhésif (5, 5a) étant appliquée entre le bord d'assemblage (11) et la surface de la traverse, et **en ce que** le bord d'assemblage (11) de chaque talon présente une épaisseur variable le long de sa périphérie et dans la direction de l'axe du talon, cette épaisseur étant choisie de manière à minimiser les contraintes subies par l'adhésif dans la zone d'assemblage.

2. Train de véhicule selon la revendication 1, **caractérisé en ce que** le bord d'assemblage (11) de chaque talon présente une largeur variable le long de sa périphérie.

3. Train de véhicule selon la revendication 1 ou 2, **caractérisé en ce que** le bord d'assemblage de chaque talon est formé d'une paroi tubulaire (11).

4. Train de véhicule selon la revendication 1 ou 2, **caractérisé en ce que** le bord d'assemblage (11) de chaque talon est formé d'une paroi tubulaire interne (11a) et d'une paroi tubulaire externe (11b) séparées par une gorge apte à recevoir l'extrémité (20) de la traverse.

5. Train de véhicule selon la revendication 3 ou 4, **caractérisé en ce que** la paroi tubulaire (11) du bord d'assemblage, ou la paroi interne (11a) de la gorge du bord d'assemblage, est apte à générer un auto-frettage avec la surface interne de l'extrémité (20) de la traverse.

6. Train de véhicule selon la revendication 4, ou 5 lorsqu'elle dépend de la revendication 4, **caractérisé en ce qu'**une deuxième couche d'adhésif (5b) est appliquée entre la surface externe de l'extrémité (20) de la traverse et la paroi externe (11b) de la gorge.

7. Train de véhicule selon l'une des revendications 1 à 6, **caractérisé en ce qu'**une bague de dimensions internes sensiblement correspondantes aux dimensions externes de la traverse, ou du talon, est sertie autour des extrémités de la traverse, ou du talon, au niveau du bord d'assemblage de chaque talon.

8. Train de véhicule selon l'une des revendications 1 à 7, **caractérisé en ce que** chaque extrémité de la traverse présente une section ouverte dirigée vers le sol.

9. Train de véhicule selon l'une des revendications 1 à 8, **caractérisé en ce que** les extrémités de la traverse présentent une section fermée de section croissante, et **en ce que** les bords d'assemblage des talons présentent une section décroissante de forme sensiblement correspondante.

10. Train de véhicule selon l'une des revendications 1 à 9, **caractérisé en ce que** la partie centrale de la traverse présente une section ouverte.

11. Train de véhicule selon l'une des revendications 1 à 10, **caractérisé en ce que** la traverse et les bras sont en des matériaux non métallurgiquement soudables.

12. Train de véhicule selon la revendication 11, **caractérisé en ce que** la traverse est en acier à haute résistance et les bras sont en aluminium moulé.

13. Procédé d'assemblage du train de véhicule selon l'une des revendications 1 à 12, **caractérisé en ce que**
a) au moins une couche d'adhésif (5, 5a) est appliquée sur les extrémités (20) de la traverse ou sur les parois (11, 11a) du bord d'assemblage (11),
b) les extrémités (20) sont ensuite engagées avec les bords d'assemblage (11),
c) la couche d'adhésif est ensuite durcie à température ambiante ou par chauffage.

14. Procédé d'assemblage de train de véhicule selon la revendication 13, le bord d'assemblage (11) de chaque talon étant formé d'une paroi tubulaire interne (11a) et d'une paroi tubulaire externe (11b) séparées par une gorge apte à recevoir l'extrémité (20) de la traverse, dans lequel, dans l'étape a), une première couche d'adhésif (5a) est appliquée sur la face interne de l'extrémité (20) de la traverse ou sur la paroi interne (11a) du bord d'assemblage (11), et une deuxième couche d'adhésif (5b) est appliquée sur la face externe de la traverse (11) ou sur la paroi externe (11b) du bord d'assemblage (11).

15. Procédé d'assemblage de train de véhicule selon la revendication 13 ou 14, les extrémités de la traverse présentant une section ouverte, dans lequel, dans l'étape b), les extrémités (20) de la traverse sont légèrement écartées ou légèrement refermées avant d'être engagées avec les bords d'assemblages, puis relâchées.

## Claims

1. Structural motor vehicle axle system comprising two longitudinal arms (1) made of molded material and a torsionally flexible cross bracing (2) made of a high strength material different from the material of the arms, each arm comprising a lug (10), of substantially tubular closed profile and with an axis substantially perpendicular to the axis of the arms, for assembling by structural bonding the cross bracing to the arms, **characterized in that** each lug (10) has an assembling edge (11) adapted to be assembled to one end (20) of the cross bracing by generating self-binding with a surface of the cross bracing, an adhesive layer (5, 5a) being applied between the assembling edge (11) and the surface of the cross bracing, and **in that** the assembling edge (11) of each lug has a variable thickness along its periphery and in the direction of the lug axis, this thickness being selected so as to minimize the stresses exerted on the adhesive in the assembly zone.

2. Structural motor vehicle axle system according to Claim 1, **characterized in that** the assembling edge (11) of each lug has a variable width along its periphery.

3. Structural motor vehicle axle system according to Claim 1 or 2, **characterized in that** the assembling edge of each lug is formed by a tubular wall (11).

4. Structural motor vehicle axle system according to Claim 1 or 2, **characterized in that** the assembling edge (11) of each lug is formed by an internal tubular wall (11a) and an external tubular wall (11b) separated by a groove capable of receiving the end (20) of the cross bracing.

5. Structural motor vehicle axle system according to Claim 3 or 4, **characterized in that** the tubular wall (11) of the assembling edge or the internal wall (11a) of the groove of the assembling edge is capable of generating self-binding with the internal surface of the end (20) of the cross bracing.

6. Structural motor vehicle axle system according to Claim 4 or 5, when it depends on claim 4, **characterized in that** a second adhesive layer (5b) is applied between the external surface of the end (20) of the cross bracing and the external wall (11b) of the groove.

7. Structural motor vehicle axle system according to one of Claims 1 to 6, **characterized in that** a ring of internal dimensions substantially corresponding to the external dimensions of the cross bracing, or of the lug, is crimped around the ends of the cross bracing or of the lug, in the region of the assembling edge of each lug.

8. Structural motor vehicle axle system according to one of Claims 1 to 7, **characterized in that** each end of the cross bracing has an open section oriented toward the ground.

9. Structural motor vehicle axle system according to one of Claims 1 to 8, **characterized in that** the ends of the cross bracing have a closed section of increasing section and **in that** the assembling edges of the lugs have a decreasing section of substantially corresponding shape.

10. Structural motor vehicle axle system according to one of Claims 1 to 9, **characterized in that** the central part of the cross bracing has an open section.

11. Structural motor vehicle axle system according to one of Claims 1 to 10, **characterized in that** the cross bracing and the arms are made of materials which are not metallurgically weldable.

12. Structural motor vehicle axle system according to Claim 11, **characterized in that** the cross bracing is made of high strength steel and the arms are made of molded aluminum.

13. Method for assembling the structural motor vehicle axle system according to one of Claims 1 to 12, **characterized in that**
a) at least one adhesive layer (5, 5a) is applied to the ends (20) of the cross bracing or to the walls (11, 11a) of the assembling edge,
b) the ends (20) are then engaged with the assembling edges (11),
c) the adhesive layer is then cured at ambient temperature or by heating.

14. Method for assembling the structural motor vehicle axle system according to Claim 13, the assembling edge (11) of each lug being formed by an internal tubular wall (11a) and an external tubular wall (11b) separated by a groove capable of receiving the end (20) of the cross bracing, in which, in step a), a first adhesive layer (5a) is applied to the internal face of the end (20) of the cross bracing or to the internal wall (11a) of the assembling edge (11).

15. Method for assembling the structural motor vehicle axle system according to Claim 13 or 14, the ends of the cross bracing having an open section, in which method, in step b), the ends (20) of the cross bracing are slightly spread apart or slightly closed before being engaged with the assembling edges, then released.

## Patentansprüche

1. Kraftfahrzeug-Fahrwerk, das zwei Längsarme (1) aus Gusswerkstoff und einen verdrehbaren Querträger (2) enthält, der aus einem hochfesten Werkstoff hergestellt ist, der sich vom Werkstoff der Arme unterscheidet, wobei jeder Arm einen Ansatz (10) mit einem im Wesentlichen rohrförmigen, geschlossenen Profil und mit einer Achse im Wesentlichen lotrecht zur Achse der Arme aufweist, um den Querträger durch Strukturkleben mit den Armen zu verbinden, **dadurch gekennzeichnet, dass** jeder Ansatz (10) einen Montagerand (11) aufweist, der mit einem Ende (20) des Querträgers verbunden werden kann, indem eine Autofrettage mit einer Fläche des Querträgers erzeugt wird, wobei eine Klebstoffschicht (5, 5a) zwischen dem Montagerand (11) und der Fläche des Querträgers aufgebracht wird, und dass der Montagerand (11) jedes Ansatzes entlang seines Umfangs und in Richtung der Achse des Ansatzes eine variable Dicke aufweist, wobei diese Dicke so gewählt wird, dass die vom Klebstoff in der Montagezone erfahrenen Spannungen minimiert werden.

2. Fahrzeugfahrwerk nach Anspruch 1, **dadurch gekennzeichnet, dass** der Montagerand (11) jedes Ansatzes eine entlang seines Umfangs variable Breite aufweist.

3. Fahrzeugfahrwerk nach Anspruch 1 oder 2, **dadurch gekennzeichnet, dass** der Montagerand jedes Ansatzes von einer rohrförmigen Wand (11) geformt wird.

4. Fahrzeugfahrwerk nach Anspruch 1 oder 2, **dadurch gekennzeichnet, dass** der Montagerand (11) jedes Ansatzes von einer inneren rohrförmigen Wand (11a) und von einer äußeren rohrförmigen Wand (11b) geformt wird, die durch eine Hohlkehle getrennt sind, die das Ende (20) des Querträgers aufnehmen kann.

5. Fahrzeugfahrwerk nach Anspruch 3 oder 4, **dadurch gekennzeichnet, dass** die rohrförmige Wand (11) des Montagerands, oder die Innenwand (11a) der Hohlkehle des Montagerands, eine Autofrettage mit der Innenfläche des Endes (20) des Querträgers erzeugen kann.

6. Fahrzeugfahrwerk nach Anspruch 4 oder 5, wenn er von Anspruch 4 abhängt, **dadurch gekennzeichnet, dass** eine zweite Klebstoffschicht (5b) zwischen der Außenfläche des Endes (20) des Querträgers und der Außenwand (11b) der Hohlkehle aufgebracht wird.

7. Fahrzeugfahrwerk nach einem der Ansprüche 1 bis 6, **dadurch gekennzeichnet, dass** ein Ring mit Innenabmessungen, die im Wesentlichen den Außenabmessungen des Querträgers oder des Ansatzes entsprechen, um die Enden des Querträgers oder des Ansatzes in Höhe des Montagerands jedes Ansatzes aufgequetscht wird.

8. Fahrzeugfahrwerk nach einem der Ansprüche 1 bis 7, **dadurch gekennzeichnet, dass** jedes Ende des Querträgers einen zum Boden gerichtet offenen Querschnitt aufweist.

9. Fahrzeugfahrwerk nach einem der Ansprüche 1 bis 8, **dadurch gekennzeichnet, dass** die Enden des Querträgers einen geschlossenen Querschnitt mit zunehmendem Querschnitt aufweisen, und dass die Montageränder der Ansätze einen abnehmenden Querschnitt von im Wesentlichen entsprechender Form aufweisen.

10. Fahrzeugfahrwerk nach einem der Ansprüche 1 bis 9, **dadurch gekennzeichnet, dass** der zentrale Bereich des Querträgers einen offenen Querschnitt aufweist.

11. Fahrzeugfahrwerk nach einem der Ansprüche 1 bis 10, **dadurch gekennzeichnet, dass** der Querträger und die Arme aus nicht metallurgisch schweißbaren Werkstoffen sind.

12. Fahrzeugfahrwerk nach Anspruch 11, **dadurch gekennzeichnet, dass** der Querträger aus hochfestem Stahl ist und die Arme aus gegossenem Aluminium sind.

13. Verfahren zur Montage des Fahrzeugfahrwerks nach einem der Ansprüche 1 bis 12, **dadurch gekennzeichnet, dass**
a) mindestens eine Klebstoffschicht (5, 5a) auf die Enden (20) des Querträgers oder auf die Wände (11, 11a) des Montagerands (11) aufgebracht wird,
b) die Enden (20) anschließend mit dem Montagerändern (11) in Eingriff gebracht werden,
c) die Klebstoffschicht dann bei Umgebungstemperatur oder durch Erwärmen gehärtet wird.

14. Montageverfahren eines Fahrzeugfahrwerks nach Anspruch 13, wobei der Montagerand (11) jedes Ansatzes von einer inneren rohrförmigen Wand (11a) und von einer äußeren rohrförmigen Wand (11b) geformt wird, die durch eine Hohlkehle getrennt sind, welche das Ende (20) des Querträgers aufnehmen kann, bei dem im Schritt a) eine erste Klebstoffschicht (5a) auf die Innenseite des Endes (20) des Querträgers oder auf die Innenwand (11a) des Montagerands (11) aufgebracht wird, und eine zweite Klebstoffschicht (5b) auf die Außenseite des Querträgers (11) oder auf die Außenwand (11b) des Montagerands (11) aufgebracht wird.

15. Montageverfahren eines Fahrzeugfahrwerks nach den Ansprüchen 13 und 14, wobei die Enden des Querträgers einen offenen Querschnitt haben, bei dem im Schritt b) die Enden (20) des Querträgers leicht gespreizt oder leicht geschlossen werden, ehe sie mit den Montagerändern in Eingriff gebracht werden, und dann losgelassen werden.
